# EUROPÄISCHE PATENTSCHRIFT

(11) **EP 0 610 746 B1**
(45) Veröffentlichungstag und Bekanntmachung des Hinweises auf die Patenterteilung: **02.05.1997**
(21) Anmeldenummer: 94101267.6
(22) Anmeldetag: 28.01.1994
(51) Int. Cl.: C08G 79/04, C08L 101/00, C08K 13/02

(54) **Halogenfreie, flammwidrige polymere Massen**
Halogen-free flame-retardant polymeric masses
Masses polymériques ignifuges libres de l'halogène

(30) Priorität: 09.02.1993 DE 4303653
(43) Veröffentlichungstag der Anmeldung: 17.08.1994
(73) Patentinhaber: HOECHST AKTIENGESELLSCHAFT, 65926 Frankfurt am Main (DE)
(72) Erfinder: Staendeke, Horst, Dr., D-53797 Lohmar (DE)

(56) Entgegenhaltungen:
- EP-A- 0 008 486
- EP-A- 0 045 835

## Beschreibung

Die vorliegende Erfindung betrifft halogenfreie, flammwidrige polymere Massen, welche ein Intumeszenz-Flammschutzmittel enthalten, das aus Ammoniumpolyphosphat und einer phosphororganischen Stickstoffkomponente besteht.

Aus der AU-PS 592 219 ist ein Flammschutzsystem für Polyolefine bekannt, welches aus einer Mischung von Ammoniumpolyphosphat und Tris(2-hydroxyethyl)isocyanurat besteht.

Nachteilig ist bei diesem Flammschutzmittel die hohe Wasserlöslichkeit des als Synergisten wirkenden Tris-hydroxyalkyl-isocyanurates

Es ist daher Aufgabe der vorliegenden Erfindung, ein Flammschutzsystem für polymere Massen anzugeben, welches neben Ammoniumpolyphosphat eine dem Tris-hydroxyalkyl-isocyanurat in seinen synergistischen Eigenschaften vergleichbare Substanz enthält und gleichzeitig nur geringe Wasserlöslichkeit aufweist.

Überraschenderweise sind Phosphorsäurepolyester der allgemeinen Formel 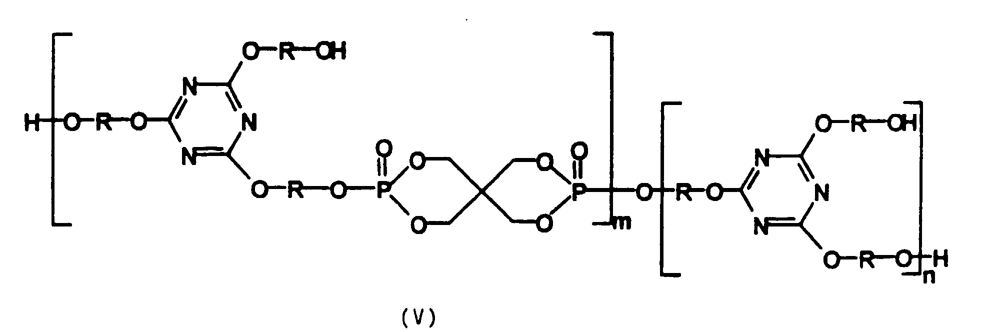 oder 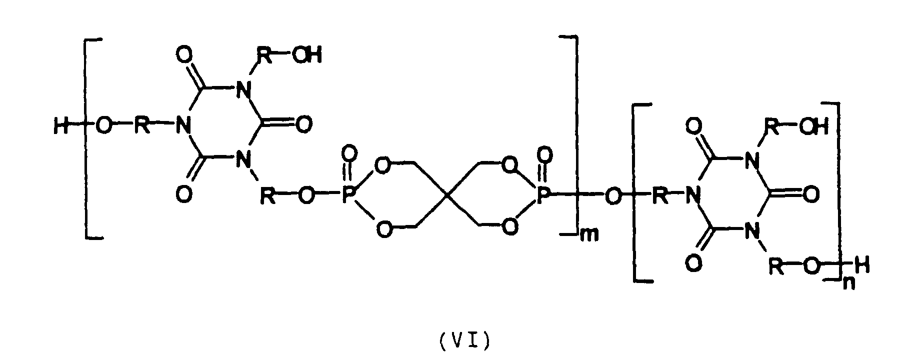 in denen R für =CH₂, =C₂H₄ oder =C₃H₆ steht sowie m 1 bis 10 und n 1 bis 6 sind, wenig wasserlöslich und wirken mit Ammoniumpolyphosphat in Flammschutzsystemen für polymere Massen als Synergist.

Die flammwidrigen Massen gemäß der Erfindung können wahlweise auch noch dadurch ausgestaltet sein, daß
a) das in ihnen enthaltene Intumeszenz-Flammschutzsystem aus 30 bis 70 Masse% Phosphorsäurepolyester besteht;
b) sie 15 bis 40 Masse% des Flammschutzmittels enthalten;
c) sie Thermoplaste sind;
d) die Thermoplaste Polyolefine sind.

Die Phosphorsäurepolyester, welche Bestandteil des Intumeszenz-Flammschutzsystems der erfindungsgemäßen flammwidrigen polymeren Massen sind, können hergestellt werden, in dem man zunächst Pentaerythrit mit überschüssigem Phosphoroxichlorid zum Dichlorid des cyclischen Phosphorsäureesters 2,4,8,10-Tetraoxa-3,9-dioxo-3,9-dichloro-phosphaspiro-[5.5]-undecan reagieren läßt, wobei das Dichlorid durch Hydrolyse in den cyclischen Phosphorsäureester 2,4,8,10-Tetraoxa-3,9-dioxo-3,9-dihydroxy-phosphaspiro-[5.5]-undecan überführbar ist.

Diesen Umsetzungen liegen folgende Reaktionen zugrunde: 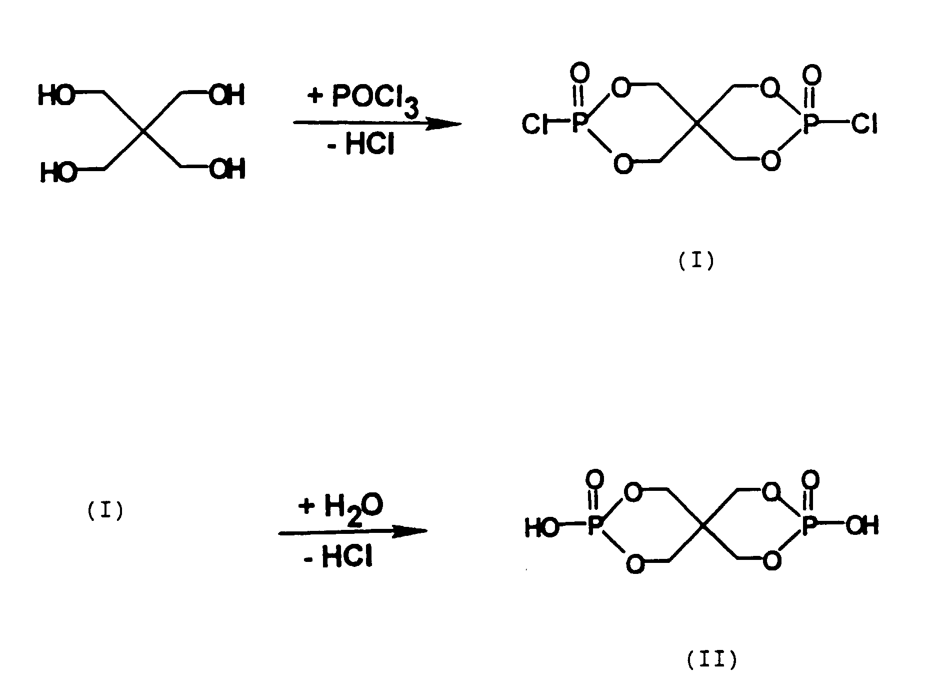 (vergl. R. Rätz und O.J. Sweeting in: Journal of Organic Chemistry, Band 28 (1963) Seiten 1608 bis 1612).

Den so erhaltenen cyclischen Phosphorsäureester (II) setzt man bei Temperaturen von 120 bis 250°C mit einem Tris-hydroxyalkylcyanurat der allgemeinen Formel (III) 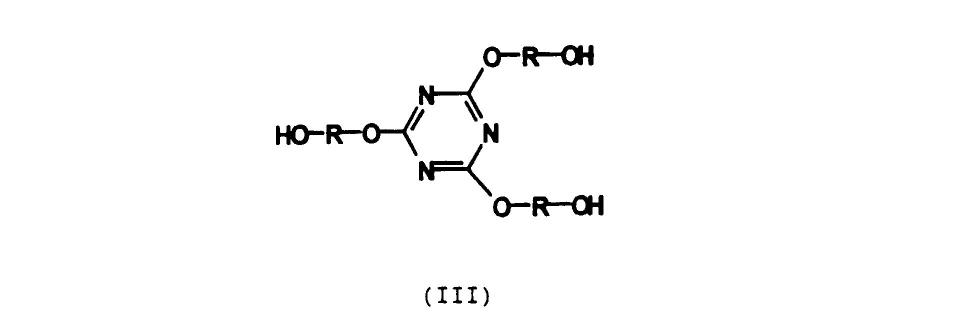 oder einem Tris-hydroxyalkylisocyanurat der allgemeinen Formel (IV) 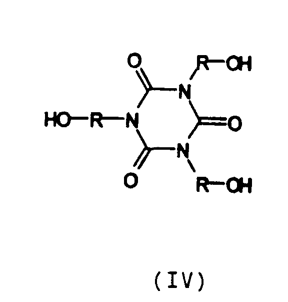 in Gegenwart eines Katalysators, beispielsweise Tetra-n-butyltitanat, 2 bis 12 Stunden um, wobei unter Wasserabspaltung Reaktionsprodukte der allgemeinen Formel (V) 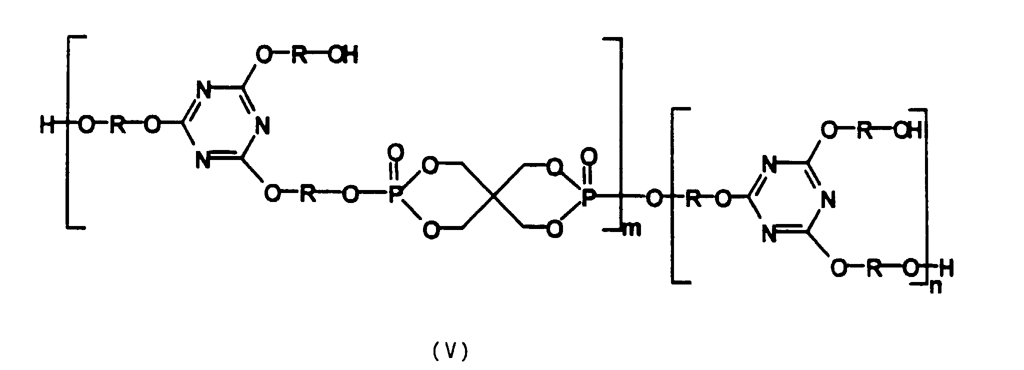 oder der allgemeinen Formel (VI) 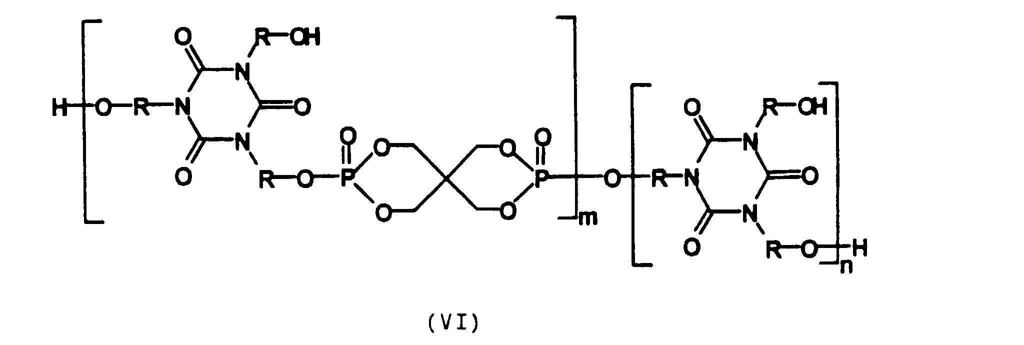 gebildet werden, in denen R für =CH₂, =C₂H₄ oder =C₃H₆ steht sowie m 1 bis 10 und n 1 bis 6 sind.

Die Phosphorsäurepolyester können durch Umsetzung des Cyanurates mit dem cyclischen Phosphorsäureester im Molverhältnis von 5 : (5 bis 2) hergestellt werden, wobei bei Verringerung des Anteils an cyclischem Phosphorsäureester die Wasserlöslichkeit der resultierenden Phosphorsäurepolyester abnimmt.

Das Ammoniumpolyphosphat, welches Bestandteil des Intumeszenz-Flammschutzsystems der flammwidrigen polymeren Massen gemäß der Erfindung ist, kann ein freifließendes, pulverförmiges, in Wasser schwerlösliches Ammoniumpolyphosphat der Formel (NH₄PO₃)ₙ mit n-Werten von 200 bis 1000 sein und eine Teilchengröße von mehr als 99 % < 45 µm aufweisen. Dabei kann das Ammoniumpolyphosphat bis zu 25 Masse% eines wasserunlöslichen, gegebenenfalls gehärteten Kunstharzes, welches die einzelnen Ammoniumpolyphosphatteilchen umhüllt, enthalten.

Die Prozentangaben in den folgenden Beispielen sind Gewichtsprozente.

### Beispiel 1

In einem beheizbaren Laborkneter (Arbeitsvolumen: 5 l) wurden

| | |
|---|---|
| 1096 g | (4,2 Mol) Tris-(2-hydroxyethyl)-isocyanurat (THEIC) |
| 1092 g | (4,2 Mol) cyclischer Phosphorsäureester (2,4,8,10-Tetraoxa-3,9-dioxo-3,9-dihydroxy-phosphaspiro[5.5]-undecan) |
| 21 g | Tetra-n-butyltitanat |

eingefüllt und unter einem schwachen Stickstoffstrom nach folgendem Zeit/Temperaturprogramm zur Reaktion gebracht:

| Zeit (Std.) | Temperatur (°C) |
|---|---|
| 2 | 20 - 150 |
| 1 | 150 - 170 |
| 4 | 170 - 185 |

Das Reaktionsprodukt wurde nach dem Erkalten in einer Porzellankugelmühle gemahlen und anschließend analysiert:

| | | |
|---|---|---|
| Gehalt an | Phosphor | 10,0 % |
| | Kohlenstoff | 33,5 % |
| | Stickstoff | 9,0 % |
| | | |
| | Wasserlöslichkeit bei 25°C: | 3,0 % |
| | Wasserlöslichkeit bei 60°C: | 3,4 % |

### Beispiel 2

Es wurde analog Beispiel 1 gearbeitet, wobei jedoch

| | |
|---|---|
| 1044 g | (4 Mol) THEIC |
| 780 g | (3 Mol) cyclischer Phosphorsäureester |
| 18 g | Tetra-n-butyltitanat |

eingesetzt wurden.

Die Einsatzstoffe wurden nach folgendem Zeit/Temperaturprogramm zur Reaktion gebracht:

| Zeit (Std.) | Temperatur (°C) |
|---|---|
| 2 | 20 - 150 |
| 1 | 150 - 170 |
| 2 | 170 - 190 |

Das Reaktionsprodukt wurde analog Beispiel 1 aufbereitet und analysiert:

| | | |
|---|---|---|
| Gehalt an | Phosphor | 11,9 % |
| | Kohlenstoff | 32,9 % |
| | Stickstoff | 8,2 % |
| | | |
| | Wasserlöslichkeit bei 25°C: | 1,7 % |
| | Wasserlöslichkeit bei 60°C: | 1,9 % |

### Beispiel 3

Es wurde analog Beispiel 1 gearbeitet, wobei jedoch

| | |
|---|---|
| 1305 g | (5 Mol) THEIC |
| 650 g | (2,5 Mol) cyclischer Phosphorsäureester |
| 20 g | Tetra-n-butyltitanat |

eingesetzt wurden.

Die Einsatzstoffe wurden nach folgendem Zeit/Temperaturprogramm zur Reaktion gebracht:

| Zeit (Std.) | Temperatur (°C) |
|---|---|
| 2 | 20 - 150 |
| 2 | 150 - 170 |
| 2 | 170 - 200 |

Das Reaktionsprodukt wurde analog Beispiel 1 aufbereitet und analysiert:

| | | |
|---|---|---|
| Gehalt an | Phosphor | 8,3 % |
| | Kohlenstoff | 36,9 % |
| | Stickstoff | 11,2 % |
| | | |
| | Wasserlöslichkeit bei 25°C: | 0,4 % |
| | Wasserlöslichkeit bei 60°C: | 0,5 % |

### Beispiel 4

Es wurde analog Beispiel 1 gearbeitet, wobei jedoch

| | |
|---|---|
| 1305 g | (5 Mol) THEIC |
| 520 g | (2 Mol) cyclischer Phosphorsäureester |
| 18 g | Tetra-n-butyltitanat |

eingesetzt wurden.

Die Einsatzstoffe wurden nach folgendem Zeit/Temperaturprogramm zur Reaktion gebracht:

| Zeit (Std.) | Temperatur (°C) |
|---|---|
| 2 | 20 - 150 |
| 2 | 150 - 170 |
| 6 | 170 - 200 |

Das Reaktionsprodukt wurde analog Beispiel 1 aufbereitet und analysiert:

| | | |
|---|---|---|
| Gehalt an | Phosphor | 7,1 % |
| | Kohlenstoff | 37,8 % |
| | Stickstoff | 12,0 % |
| | | |
| | Wasserlöslichkeit bei 25°C: | 0,2 % |
| | Wasserlöslichkeit bei 60°C: | 0,4 % |

Die gemäß den Beispielen 1 bis 4 hergestellten Phosphorsäurepolyester wurden als Ammoniumpolyphosphat-Synergisten zur flammwidrigen Ausrüstung von polymeren Massen geprüft.

Als Brandtests wurden in den folgenden Beispielen 5 bis 13 der Sauerstoffindex-Test gemäß ASTM-D 2863 und der UL 94-Vertikaltest gemäß Underwriters Laboratories "Test for Flammability of Plastic Material - UL 94" durchgeführt.

Die Ergebnisse der Brandprüfungen sowie die Wasserlöslichkeit der eingesetzten Synergisten sind in der beigefügten Tabelle zusammengefaßt.

### Beispiel 5 (Vergleichsbeispiel)

In einem SPANGENBERG-Intensivmischer (20 1 Inhalt) wurden

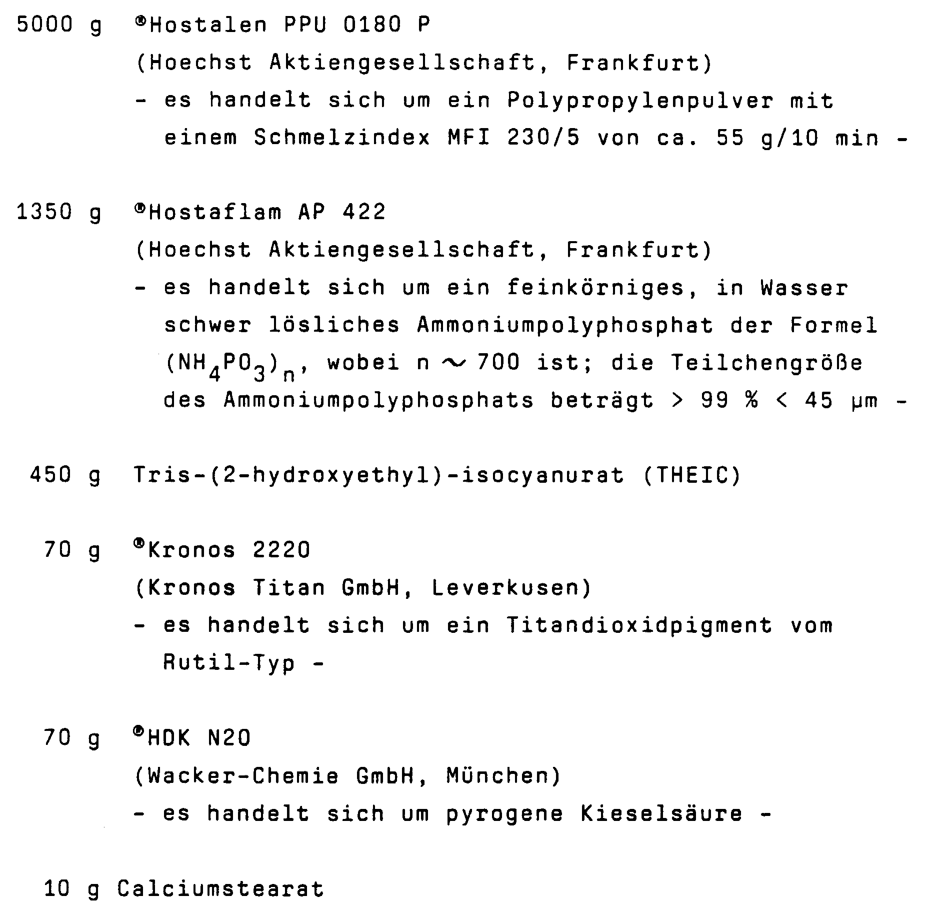

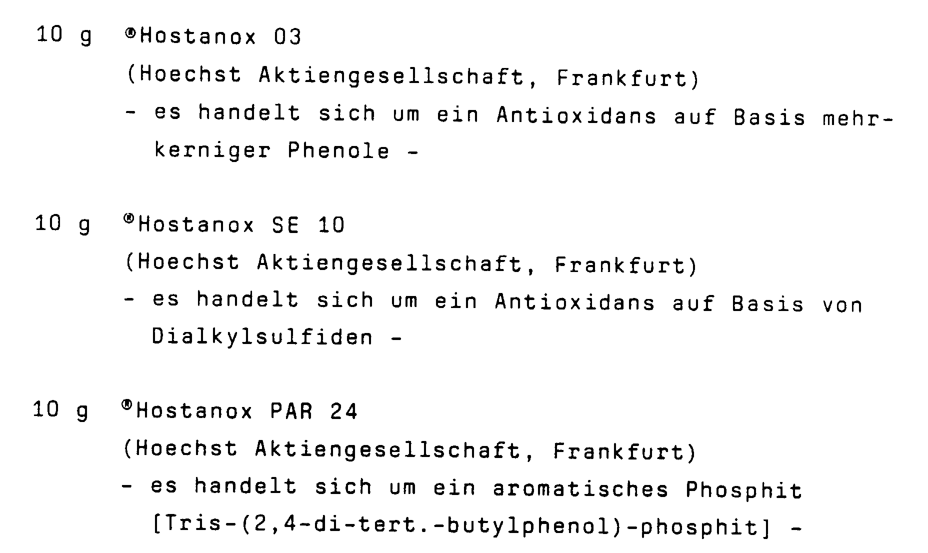

gemischt, in einem WEBER-Kleinextruder (20 mm Schneckendurchmesser) bei 180 bis 200°C extrudiert und mit Hilfe eines DREHER-Laborgranulators granuliert.

Aus dem getrockneten Granulat wurden in einer dampfbeheizten BECKER-VAN-HÜLLEN-Presse bei einer Temperatur von 195°C und einem Druck von 2 bis 3 bar (5 bis 10 min) bzw. 300 bar (2 min) Testplatten von 1,6 mm Dicke hergestellt, aus denen Prüfkörper von 127 mm Länge und 12,7 mm Breite ausgeschnitten wurden.

### Beispiel 6 (gemäß der Erfindung)

Es wurde analog Beispiel 5 gearbeitet, wobei jedoch

| | |
|---|---|
| 1470 g | ®Hostaflam AP 422 |

und anstelle von THEIC als Synergist

| | |
|---|---|
| 735 g | Phosphorsäurepolyester gemäß Beispiel 1 |

eingesetzt wurden.

### Beispiel 7 (gemäß der Erfindung)

Es wurde analog Beispiel 5 gearbeitet, wobei jedoch

| | |
|---|---|
| 1100 g | ®Hostaflam AP 422 |

und

| | |
|---|---|
| 1100 g | Phosphorsäurepolyester gemäß Beispiel 1 |

eingesetzt wurden.

### Beispiel 8 (gemäß der Erfindung)

Es wurde analog Beispiel 5 gearbeitet, wobei jedoch

| | |
|---|---|
| 735 g | ®Hostaflam AP 422 |

und

| | |
|---|---|
| 1470 g | Phosphorsäurepolyester gemäß Beispiel 1 |

eingesetzt wurden.

### Beispiel 9 (gemäß der Erfindung)

Es wurde analog Beispiel 5 gearbeitet, wobei jedoch

| | |
|---|---|
| 1010 g | ®Hostaflam AP 422 |

und als Synergist

| | |
|---|---|
| 1010 g | Phosphorsäurepolyester gemäß Beispiel 2 |

eingesetzt wurden.

### Beispiel 10 (gemäß der Erfindung)

Es wurde analog Beispiel 5 gearbeitet, wobei jedoch

| | |
|---|---|
| 1350 g | ®Hostaflam AP 422 |

und als Synergist

| | |
|---|---|
| 675 g | Phosphorsäurepolyester gemäß Beispiel 3 |

eingesetzt wurden.

### Beispiel 11 (gemäß der Erfindung)

Es wurde analog Beispiel 5 gearbeitet, wobei jedoch

| | |
|---|---|
| 1010 g | ®Hostaflam AP 422 |

und als Synergist

| | |
|---|---|
| 1010 g | Phosphorsäurepolyester gemäß Beispiel 3 |

eingesetzt wurden.

### Beispiel 12 (gemäß der Erfindung)

Es wurde analog Beispiel 6 gearbeitet, wobei jedoch als Synergist

| | |
|---|---|
| 735 g | Phosphorsäurepolyester gemäß Beispiel 4 |

eingesetzt wurden.

### Beispiel 13 (gemäß der Erfindung)

Es wurde analog Beispiel 5 gearbeitet, wobei jedoch

| | |
|---|---|
| 1100 g | ®Hostaflam AP 422 |

und als Synergist

| | |
|---|---|
| 1100 g | Phosphorsäurepolyester gemäß Beispiel 4 |

eingesetzt wurden.

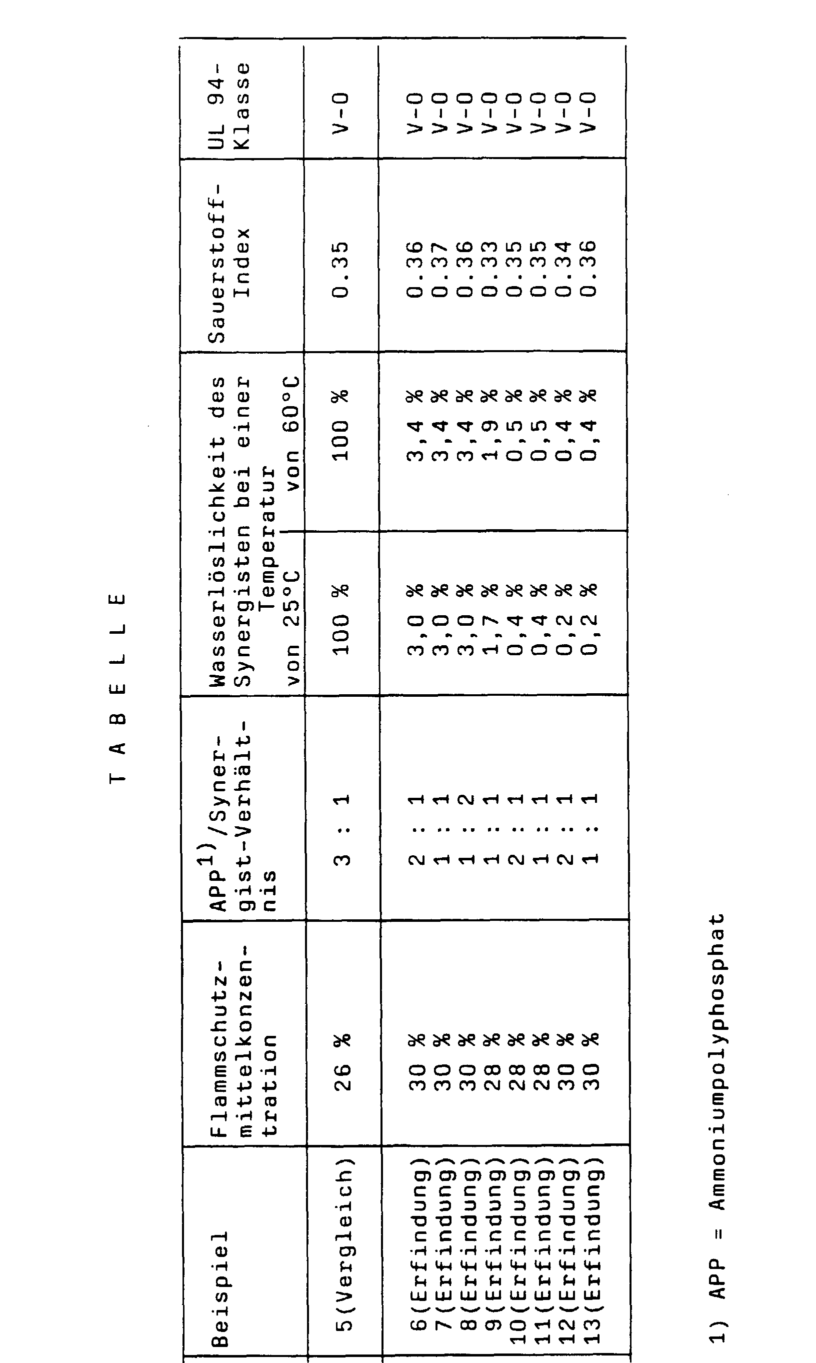

## Patentansprüche

1. Halogenfreie, flammwidrige polymere Massen enthaltend ein Intumeszenz-Flammschutzsystem, welches aus Ammoniumpolyphosphat und einer phosphororganischen Stickstoffkomponente besteht, dadurch gekennzeichnet, daß die phosphororganische Stickstoffkomponente ein Phosphorsäurepolyester gemäß der allgemeinen Formel (V) 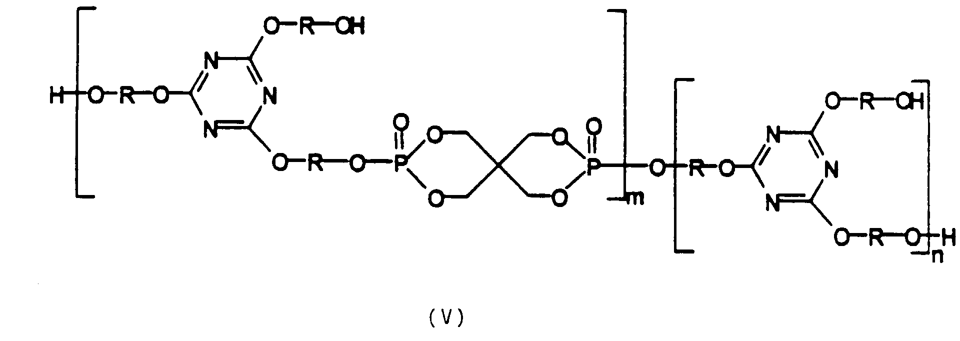 oder der allgemeinen Formel (VI) 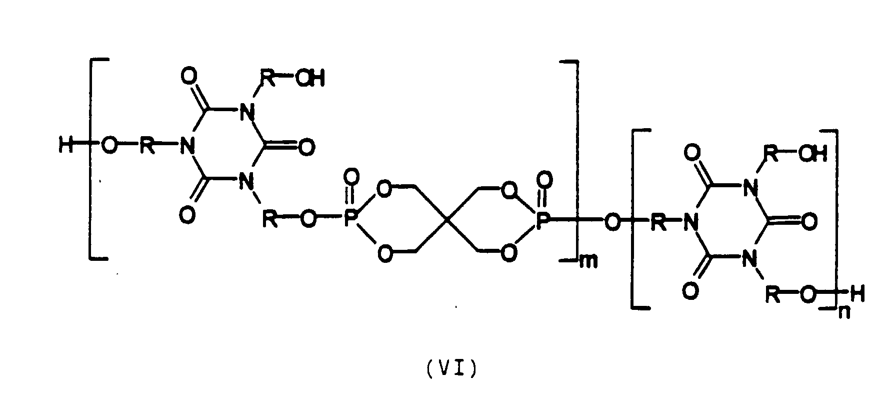 ist, wobei R für =CH₂, =C₂H₄ oder =C₃H₆ steht sowie m 1 bis 10 und n 1 bis 6 sind.

2. Halogenfreie, flammwidrige polymere Massen nach Anspruch 1, dadurch gekennzeichnet, daß das in ihnen enthaltene Flammschutzsystem aus 30 bis 70 Masse% Phosphorsäurepolyester besteht.

3. Halogenfreie, flammwidrige polymere Massen nach Anspruch 1 oder 2, dadurch gekennzeichnet, daß sie 15 bis 40 Masse% des Flammschutzsystems enthalten.

4. Halogenfreie, flammwidrige polymere Massen nach mindestens einem der Ansprüche 1 bis 3, dadurch gekennzeichnet, daß sie Thermoplaste sind.

5. Halogenfreie, flammwidrige polymere Massen nach Anspruch 4, dadurch gekennzeichnet, daß die Thermoplaste Polyolefine sind.

## Claims

1. A halogen-free, flame-resistant polymeric composition comprising an intumescence flameproofing system which comprises ammonium polyphosphate and an organophosphorus nitrogen component, wherein the organophosphorus nitrogen component is a phosphoric acid polyester of the formula (V) 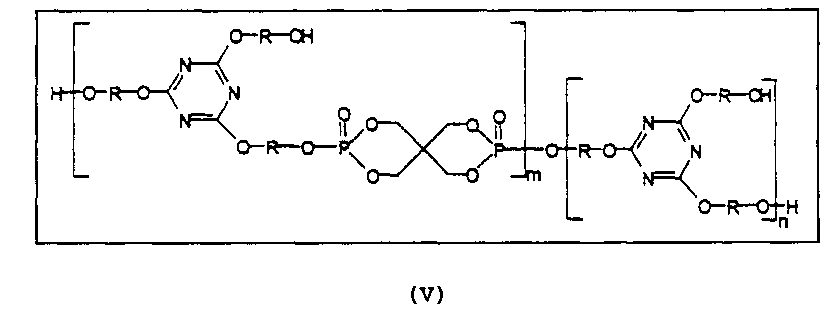 or of the formula (VI) 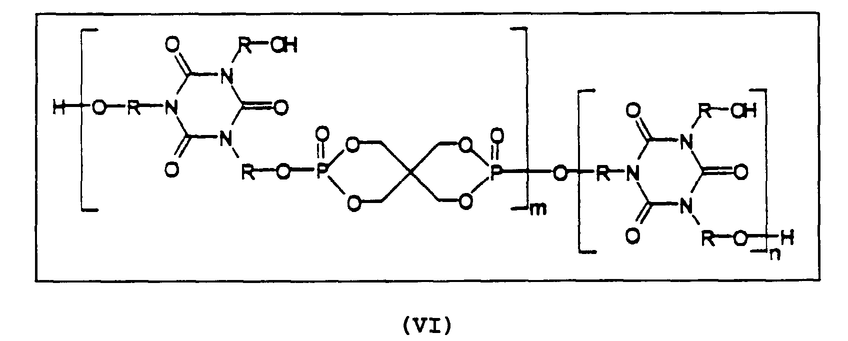 where R is =CH₂, =C₂H₄ or =C₃H₆ and m is 1 to 10 and n is 1 to 6.

2. A halogen-free, flame-resistant polymeric composition as claimed in claim 1, wherein the flameproofing system present in it comprises 30 to 70% by weight of phosphoric acid polyester.

3. A halogen-free, flame-resistant polymeric composition as claimed in claim 1 or 2, wherein the composition comprises 15 to 40% by weight of the flameproofing system.

4. A halogen-free, flame-resistant polymeric composition as claimed in at least one of claims 1 to 3, wherein the composition is a thermoplastic.

5. A halogen-free, flame-resistant polymeric composition as claimed in claim 4, wherein the thermoplastic is a polyolefin.

## Revendications

1. Masses polymères ignifuges, exemptes d'halogène contenant un système ignifuge intumescent, qui est constitué de polyphosphate d'ammonium et d'un composé phospho-organique d'azote, caractérisées en ce que le composé phospho-organique d'azote est un polyester phosphorique selon la formule générale (V): 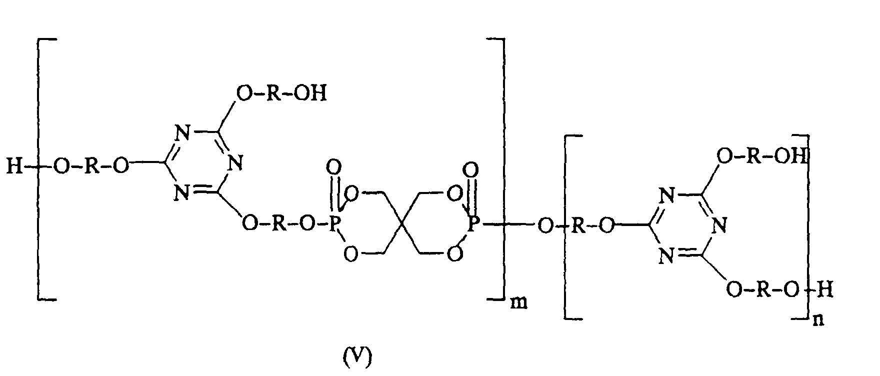 ou de formule générale (VI) 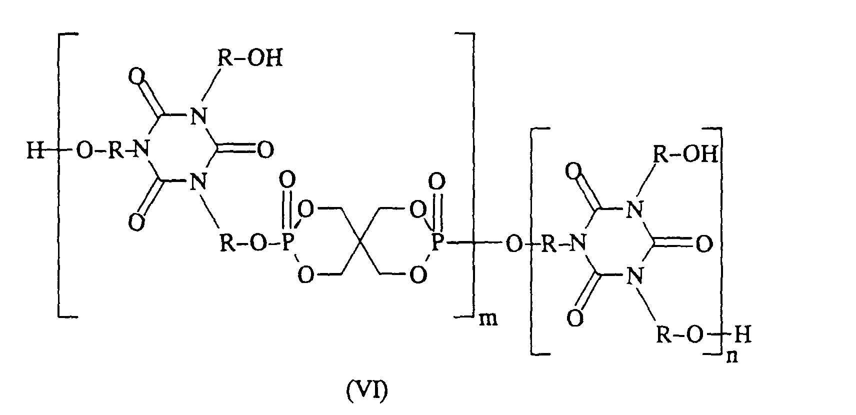 où R représente =CH₂, =C₂H₄ ou =C₃H₆ et m représente 1 à 10 et n représente 1 à 6.

2. Masses polymères ignifuges, exemptes d'halogène selon la revendication 1, caractérisées en ce que le système ignifuge qui y est compris contient 30 à 70 % en masse de polyester phosphorique.

3. Masses polymères ignifuges, exemptes d'halogène selon la revendication ou 2, caractérisées en ce qu'elles contiennent de 15 à 40 % en masse du système ignifuge.

4. Masses polymères ignifuges, exemptes d'halogène selon au moins l'une des revendications 1 à 3, caractérisées en ce que ce sont des thermoplastiques.

5. Masses polymères ignifuges, exemptes d'halogène selon la revendication 4, caractérisées en ce que les thermoplastiques sont des polyoléfines.
